# EUROPEAN PATENT APPLICATION

(11) **EP 1 920 821 A1**
(43) Date of publication of application: **14.05.2008**
(21) Application number: 06123246.8
(22) Date of filing: 31.10.2006
(51) Int. Cl.: B01D 65/02, B01D 65/06, C11D 11/00, B08B 3/00

(54) **Membrane surface cleaning using particles**

(71) Applicant: JohnsonDiversey, Inc., Sturtevant, Wisconsin 53177-0902 (US)
(72) Inventor: The designation of the inventor has not yet been filed
(74) Representative: van Heuvel, Margaretha

(57) **Abstract**

The present invention relates to a process for cleaning of a surface comprising treatment of the surface with a composition comprising particles of a chemical agent and with a rinse liquid wherein the chemical agent disperses and/or at least partly dissolves. The chemical agent preferably is a water insoluble salt like CaCO₃.

Any surface that is susceptible to fouling is suitable for the cleaning according to the invention, for instance a membrane surface used in microfiltration, ultrafiltration, nanofiltration or reverse osmosis.

## Description

In membrane filtration processes such as applied in water, food and beverage applications, membrane fouling is still one of the major drawbacks. Membrane fouling is inherent to a membrane filtration process, since retained components accumulate inside the pores of the membrane or at the membrane surface. These retained components can form a cake layer on the membrane surface, block the membrane pores completely or adsorb at the membrane surface or inner pores.

In general, different types of fouling can be distinguished, depending on the nature of the retained components. These comprise particle fouling, inorganic fouling, organic fouling and biofouling. Biofouling is defined as growth of micro-organisms on the membrane surface. Organic fouling may comprise (denatured) protein such as gluten, a heat-treated protein layer, polymerized sugars, polymerized fats (like in fryer systems), polysaccharides such as starch, and/or latex.

The fouling mechanism during membrane filtration is complex and different types of fouling may occur at the same time. Especially combinations of different fouling types may be difficult to remove from a membrane. In addition, after attempts to remove fouling it often occurs that small fragments of foulants that are left behind initiate increase in fouling due to their attracting capacity.

For a good cleaning performance, four aspects are of major importance: cleaning time chemical reaction, temperature and mechanical energy.

Cleaning time should always be as short as possible, because during cleaning no production can take place. Chemical reaction and temperature depend on the surface or membrane properties to clean. Not all surfaces, especially not membrane surfaces, can cope with chemical agents sufficiently aggressive to remove the (residual) fouling and/or elevated temperatures. Mechanical energy may be added by applying a sufficient flow velocity of the cleaning agent along the membrane surface, preferably with a turbulent flow. Besides good refreshment of the cleaning agent and the removal of fouling, the velocity of the cleaning agent gives kinetic energy. However, cleaning inside pores is often difficult, especially when it is not possible to apply a back flow (filtrate to feed side).

Currently, elevated temperature, increased flow velocity, prolonged contact time and frequent cleaning are the possible options to improve the cleaning performance. However, this is often not effective enough. Therefore, a more intensive, time efficient cleaning method still is needed, which is suitable for all membrane types independent of their chemical and physical properties and is capable to remove any type of fouling from membranes and other surfaces with high efficiency.

Therefore, the present invention provides a method advantageously combining the input of mechanical energy with a chemical reaction additionally providing heat and/or turbulence.

Thus, the present invention provides a method for the cleaning of a surface comprising treatment of the surface with a composition comprising particles of a chemical agent and with a rinse liquid wherein the chemical agent disperses and/or at least partly dissolves. Treatment of the surface with the particle composition ensures adequate removal of at least part of the fouling from the surface, whereas treatment with the rinse liquid ensures release and removal of particles from the surface.

The method of the invention is applicable to any surface which requires cleaning, including hard surfaces and membrane surfaces.

The term "membrane surface" is to be understood to encompass the surface area of the membrane as well as the inner pores of the membrane, if present. Any membrane, for instance as applied in pressure driven industrial processes, that is susceptible to fouling is suitable for the cleaning according to the invention, for instance a membrane used in microfiltration, ultrafiltration, nanofiltration or reverse osmosis. Going from microfiltration to ultrafiltration and nanofiltration, the pore size of the membrane decreases. In case of reverse osmosis the membranes are really dense and non-porous.

The membrane surface may be part of a system comprising other surfaces, like pipe and vessel surfaces. The present invention therefore encompasses cleaning of other surfaces as present in a system comprising a membrane surface.

The method of the invention is particularly suitable for cleaning in place (CIP).

According to the invention, the surface is treated with a particle composition comprising particles of a chemical agent.

A typical particle composition for use in the method of the invention comprises particles of a chemical agent in a liquid phase. The liquid phase typically comprises water and optionally other ingredients, like salts, surfactants and/or alkali. The pH of the particle composition may be between 6 and 13.5, preferably between 7 and 12. Suitable surfactants typically are anionic surfactants, although other surfactants may be used as well.

The concentration of the particles in the particle composition is between 0.01 and 50% (w/w), preferably between 0.05 and 25% (w/w), more preferably between 0.1 and 10%.

The particles may have an average diameter of 0.1-5000 µm, preferably 0.1-1000 µm, more preferably 10-100 µm.

The particle size is related to the applied flow velocity during cleaning: the larger the particle size, the larger the flow velocity needed to obtain an efficient scrubbing, i.e. with turbulent flow conditions. Furthermore, if the concentration of particles is increasing, the density of the liquid is also increasing and consequently a higher flow velocity is needed as well. The flow velocity of the applied particle composition should additionally be such that it overcomes the applied osmotic pressure in case of RO/NF membrane systems.

For instance, a minimal flow of 0.5 m/s is recommended for particles which have a diameter of 10-100 µm. Since the cleaning effect of the particles is at least partially based on impulse impact, the shape of the particles is less important for the cleaning effect. However, to prevent damaging of e.g. the underlying membrane surface, the particles preferably have a round or substantially round shape.

For treatment of the surface, the particles are provided with a kinetic energy to give the particles a momentum/impulse or shear force, resulting in a kind of bombardment of the surface to be cleaned with particles. This will lead to at least partly breaking the fouling structure. The kinetic energy may for instance be provided by pumping the particles in the liquid phase along the surface to be cleaned. The cross-flow velocity and permeate flow should be in such a balance that the particles can effectively collide with the fouling layer on the surface.

The treatment with the particle composition may conveniently be applied at 5-85 °C, preferably at 10-80 °C, more preferably at 10-70 °C and at a pH of 6-13.5, preferably 7-12. It needs a relatively short cleaning time, for instance 0.5-2 hours.

The volume of the particle-containing composition is preferably adapted to the size of the surface to be cleaned.

The particles of a chemical agent comprise a chemical agent that disperses and/or at least partly dissolves, preferably that completely dissolves, in the applied rinse liquid. The particles may contain other ingredients than the chemical agent, provided that these ingredients do not substantially disturb the dispersing and/or dissolving of the chemical agent in the rinse liquid.

The chemical agent to be used in the particles may be any compound that can be prepared in the form of particles. For instance, the chemical agent may be a salt. In one embodiment, a salt is used in particle form above its dissolution concentration, for example, sodium carbonate (Na₂CO₃), sodium bicarbonate (NaHCO₃) and/or calcium gluconate .

In an especially preferred embodiment, a water insoluble salt is used as chemical agent, preferably a water insoluble carbonate like magnesium carbonate, strontium carbonate, calcium carbonate and dolomite, or any mixture thereof, such as a mixture of magnesium carbonate and calcium carbonate.

The particles are commercially available. Generally, the production of particles, like calcium carbonate, starts with the selection of the right (natural) source in terms of composition and homogeneity. Further processing of the source material (Aragonite, Calcite, Chalk, Limestone, Marble, Travertine, Dolomite) may include washing, sorting of undesirable by-minerals, grinding, size classification of particles and/or drying. Salt particles may be formed by a crystallisation process, wherein a 'seed' crystal will attract salt of a brine and gradually grow in size over a period of time. The longer the crystal is left in the brine, the larger it will become. Particles can also be formed by a chemical reaction.

After the treatment of the membrane surface with the composition comprising particles of a chemical agent, the membrane surface is treated with a rinse liquid wherein the chemical agent disperses and/or dissolves. Preferably, the surface is first rinsed with water prior to rinsing with the rinse liquid, in order to rinse out a substantial part, for instance about 95 %, of the particles.

Preferably, the rinse liquid is an acidic aqueous solution. The pH of the acidic aqueous solution typically depends on the chemical nature of the applied particles. Preferably, the pH of the acidic aqueous solution is ≤ 4.5, more preferably between 0.6 and 4, most preferably between 0.6 and 2. The acidic aqueous solution contains at least one acid and optionally at least one supplementary cleaning agent. The at least one supplementary cleaning agent may be chosen from the group of surfactants, chelating agents, sequestrants and disinfectants. The acid may be a weak acid, like citric acid and/or carbonic acid, or a strong acid, like acetic acid or a mineral acid. A strong acid is preferred, because the dissolution reaction of the particles is faster and more complete.

When calcium carbonate is applied as chemical agent, the pH of the rinse liquid preferably is ≤ 2.

Generally, particles may easily block membrane pores, as the applied kinetic force is too low to prevent (partial) sedimentation of the particles. This will result in inefficient operation of the membrane system. The present invention solves this problem and advantageously allows easy removal of the particles from the membrane surface.

In a preferred embodiment, the treatment with rinse liquid may effectuate other reactions besides dispersion and/or dissolution of the chemical agent. For instance, heat or mechanical energy may be generated aiding the cleaning process.

In an especially preferred embodiment, the chemical agent is calcium carbonate (CaCO₃) or a mixture of magnesium carbonate and calcium carbonate, and the rinse liquid is an acidic aqueous solution as mentioned above. Upon dissolution of the carbonate in the acidic aqueous solution, an extra mechanical force is created due to the development of CO₂ by the reaction of the carbonate with the acidic solution. This advantageously increases the cleaning efficiency.

The method of the invention may be applied in a general cleaning protocol, which includes several cleaning methods like alkaline cleaning, acid cleaning, enzymatic cleaning and oxidative cleaning. Exactly the capability of the method of this invention to destroy and/or remove a sufficient part of the fouling makes it possible for other cleaning agents to reach the remaining fouling, if still present, so that it can be further removed by specific cleaning agents such as alkali, acid, enzymes and oxidisers. At the end of the cleaning protocol and/or after the method of the invention, a final step using a disinfectant may be applied.

The method of the invention is suitable for cleaning of various surfaces including hard surfaces like pipes or tubes or hard surface equipment with small flow channels like e.g. Ultra High Temperature (UHT) processing and heat exchangers, porous surfaces like membranes or fine sieves, or non-porous membranes like reverse osmosis membranes. The method of the invention may be applied to any membrane configuration, for instance a tubular and capillary configuration, a flat sheet and spiral wound configuration, a spiral wound form containing a separation material composed of a thin film polyamide layer. Possible application areas include food and pharmaceutical applications, water and wastewater treatment, microbial separations, sewage systems.

### Example 1

A cleaning test was carried out of a RO membrane (thin film DOW/ Filmtec composite spiral wound membrane) which has been used in a RO plant. The feed water for this RO plant was microfiltration pre-filtered sea water. The fouling type was mainly biofilm and metals.

Cleaning protocol:
1. • Alkaline cleaning with 1 % w/w Divos 116 (alkaline detergent of JohnsonDiversey) in demineralised water, pH 12 at 50 °C during 20 minutes circulation
   - Drain
   - Rinse with water
2. • Cleaning with a solution containing 0.1 % w/w of calcium carbonate particles of Omya A.G., which are available under the name Omyacarb 30 AV and have a particle size of 30 µm, in demineralised water, pH 9.1 at 25 °C during 45 minutes circulation
   - Drain
   - Rinse with water
3. • Acid cleaning with 1 % w/w Divos 2 (acidic product of JohnsonDiversey) and 0.2 % w/w Divosan active (disinfectant product of JohnsonDiversey, containing 5 % peracetic acid) in demineralised water, pH 1.9 at 25 °C during 30 minutes circulation
   - Drain
   - Rinse with water
4. • Alkaline cleaning with 1 % w/w Divos 116 (alkaline detergent of JohnsonDiversey) in demineralised water, pH 12 at 50 °C during 20 minutes circulation
   - Drain
   - Rinse with water

A flat sheet test rig was used for this cleaning test. The membrane surface used for the cleaning was ca. 60 cm² and the Cleaning In Place (CIP) volume was.ca.2 L.

The cleaning method of the invention includes steps 2 and 3: the second step comprises the cleaning with the particles and the third step comprises dissolving the particles and rinse them out. After step 2 the clean water flux (CWF) can not be measured, because particles are still in the membrane system and are influencing the CWF measurement. The CWF is measured by filtrating water at a constant pressure of 800 psi and measuring the flux over the membrane, before cleaning, after step 1 and after step 4. These measurements were used to evaluate the cleaning performance of the new cleaning method (step 2 and 3). Since cleaning step 1 and 4 comprises the same cleaning solution, the beneficial effect (increase in CWF) after step 4 can only be related to of the new cleaning method. The results are presented in Table 1.

**Table 1: Results of CWF measurements before and after cleaning**

| Cleaning Step | Clean Water Flux (1/m²h @ 800 psi) | | Change of CWF (%) |
|---|---|---|---|
| | Before cleaning | After cleaning | |
| | 28.27 | | |
| 1 | | 27.65 | -2 |
| 4 | | 31.01 | 10 |

The results show an increase in CWF of 10 % after applying the new cleaning method, whereas no positive results are obtained of the (common) alkaline cleaning method. Furthermore, the results show that the new cleaning method can be applied in a cleaning protocol together with other cleaning methods.

### Example 2

A cleaning test was performed at a microfiltration (MF) plant, using Memcore polypropylene (PP) membranes. The feed water for this MF plant was sea water. The fouling type was mainly organic, biofilm and metals.

Cleaning protocol:
1. • Cleaning with a solution containing 0.5 % w/w Divos 109 (alkaline detergent of JohnsonDiversey) in RO permeate, pH 9.5 at 35 °C and circulation during 30 minutes
   - Addition of 0.5 % w/w Divos 109 (alkaline detergent of JohnsonDiversey), 0.5 % w/w Adjust (alkaline additive of JohnsonDiversey) and 3000 ppm Booster (additive containing 30 w/w% hydrogen peroxide of JohnsonDiversey) in RO permeate, pH 13 adjusted with NaOH at 35 °C and circulation during 60 minutes
   - Drain
   - Rinse with RO quality water
2. • Overnight soak with NaOH at pH 12
   - Drain
   - Rinse with RO quality water
3. • Cleaning with a solution containing 0,3 % w/w of calcium carbonate particles of Omya A.G., which are available under the name Omyacarb 30 AV and have a particle size of 30 µm, in RO permeate, pH 9.3 at 30 °C during 45 minutes circulation
   - Circulate with air backwash during 15 minutes
   - Drain
   - Rinse with RO quality water
4. • Acid cleaning with 0.6 % w/w Divos 2 (acidic product of JohnsonDiversey) in RO permeate, pH 2 at 25 °C during 45 minutes circulation
   - pH adjustment to pH 4 with NaOH and addition of 0.3 % w/w Divosan forte (disinfectant product of JohnsonDiversey, containing 15 % peracetic acid) to the acid cleaning solution at 25 °C and circulation during 30 minutes
   - pH adjustment to pH 12 with NaOH to the cleaning solution and circulation during 30 minutes
   - Drain
   - Rinse with RO quality water

The membrane surface used for the cleaning was ca. 1680 m² (112 modules with 15 m²) and the Cleaning In Place (CIP) volume was approx.ca. 7 m³. The stable value of the permeability of a new membrane after start-up (stable start-up value) is 200 l/m²·h·bar.

The cleaning method of the invention includes steps 3 and 4: the third step comprises cleaning with the particles and the fourth step comprises dissolving the particles and rinse them out. After step 3 the permeability can not be measured, because particles are still in the membrane system and are influencing the permeability measurement. The permeability is measured by filtrating permeate at a constant flow and measuring the pressure differences over the membrane before cleaning, after step 1, 2 and 4. These measurements were used to evaluate the cleaning performance of the new cleaning method (step 3 and 4). Since cleaning step 2 and 4 are both ending on an alkaline cleaning step, the beneficial effect (increase in permeability) after step 4 can only be related to of the new cleaning method. The results are presented in Table 2.

**Table 2: Results of permeability measurements before and after cleaning**

| Cleaning Step | Permeability (1/m²·h·bar) | | Increase in permeability (%) | Capacity compared to stable start-up value (%) |
|---|---|---|---|---|
| | Before cleaning | After cleaning | | |
| | 80 | | | 40 |
| 1 | | 110 | 27 | 55 |
| 2 | | 120 | 8 | 60 |
| 4 | | 180 | 33 | 90 |

The results show that after applying the alkaline oxidation cleaning the permeability increased 27 % to a permeability of 110 1/m²·h·bar. After applying the new cleaning method the permeability increased 33 % additionally to a permeability of 180 1/m²·h·bar, i.e. a 90% of the stable start up value. (Compared to previous applied CIP programs with alkaline and acid cleaners from several detergent suppliers, which showed only a decrease in permeability to 50 % stable start-up value, this results shows clearly the value of the present invention The fouling could not be removed by alkaline oxidation only. First removal or destruction of the fouling was achieved after applying the new cleaning method, comprises the CaCO₃ particles, resulting in a significant increase of the permeability and thus production capacity.

## Claims

1. A process for cleaning of a surface comprising treatment of the surface with a particle composition comprising particles of a chemical agent and with a rinse liquid wherein the chemical agent disperses and/or at least partly dissolves.

2. The process according to claim 1, wherein treatment with the rinse liquid is preceded by rinsing the surface with water.

3. The process according to claim 1, wherein the surface is a membrane surface.

4. The process according to claim 1 or 2 wherein the treatment of the surface with the particle composition comprises providing the particle composition with kinetic energy.

5. The process according to claim 1 or 2, wherein the particle composition comprises particles in a liquid phase at a concentration between 0.01 and 50% (w/w), preferably 0.05 and 25%, and/or particles having an average diameter of 0.1-5000 □m, preferably 0.1-1000 □m.

6. The process according to any one of the preceding claims, wherein the chemical agent is a salt, preferably a water insoluble salt, more preferably CaCO₃.

7. The process according to any one of the preceding claims, wherein the rinse liquid is an acidic aqueous solution, preferably with a pH ≤ 4.5.

8. The process according to any one of the preceding claims, wherein the treatment with a rinse liquid effectuates the generation of heat or mechanical energy.
